# EUROPEAN PATENT APPLICATION

(11) **EP 3 847 894 A1**
(43) Date of publication of application: **14.07.2021**
(21) Application number: 21151130.8
(22) Date of filing: 12.01.2021
(51) Int. Cl.: A23B 7/144, A23B 7/152, A23L 3/3409, A23L 3/3445

(54) **SYSTEM FOR A STORAGE / TRANSPORT SPACE FOR REMOVING ETHYLENE PRESENT IN THE AIR FROM A CLOSED SPACE, AND CORRESPONDING METHOD**

(30) Priority: 13.01.2020 FI 20205028
(71) Applicant: Mundus Aer Oy, 40400 Jyväskylä (FI)
(72) Inventor: LUHANKA, Karo, 40400 JYVÄSKYLÄ (FI)
(74) Representative: Kespat Oy

(57) **Abstract**

The invention relates to a system for a storage/transport space for removing ethylene present in the air from a closed space, which storage/transport space contains an air-circulating refrigeration device (54), wherein the system includes a device (10) comprising
- a housing which creates a flow channel into the device,
- a fan (22) which creates an air flow into said housing,
- a reaction chamber (24) which includes photocatalytic surfaces and a light source which are arranged to produce a photocatalytic reaction in order to eliminate ethylene.

The system further includes
- an ethylene sensor (18) which measures the ethylene concentration present in the closed space,
- data transfer means (20) for sending the measurement data to a server (35),
- recording means for recording the measurement data.

The invention further relates to a method for the storage and transport of vegetables, fruit, flowers and other plants.

## Description

The invention relates to a system for a storage/transport space for removing ethylene present in the air from a closed space, which storage/transport space contains an air-circulating refrigeration apparatus, wherein the system includes a device comprising a housing which creates a flow channel into the device, a fan which creates an air flow into said housing and a reaction chamber which includes photocatalytic surfaces and a light source which are arranged to produce a photocatalytic reaction in order to eliminate ethylene. The invention further relates to a method for the storage and transport of vegetables, fruit, flowers and other plants.

The transport of fresh fruit, vegetables, flowers and other plants from the regions of production to the points of sale, by land and by sea, can take several days or even several weeks, during which time the plants are in a closed, refrigerated space. Moreover, plants may be stored in stores for long periods of time before being sold. As part of their natural vital functions, plants produce ethylene (ethene, C₂H₄), which causes in plants, *inter alia,* a rapid ripening of fruit, senescence in leaves and a wilting of flowers and has an impact on the taste of vegetables. In particular green plants are very sensitive to the adverse effects of ethylene such as turning yellow. Ethylene is generated in significant amounts in particular in ripening fruit and in ageing, corrupted and mouldy tissue. For example, bananas, apples, kiwis and tomatoes produce significant amounts of ethylene.

The transport and storage of plants in a closed space leads to an accumulation of ethylene in the space in which the plants are kept, the concentration of which can become quite high. A high ethylene concentration in a closed storage or transport space can lead to considerable spoilage.

The use of air purifiers in storage spaces in order to keep the ethylene concentration low is known. One suitable air-purifying device for the elimination of ethylene is known from patent publication US 2013/0202494 A1, in which an air-purifying device based on photocatalytic oxidation is disclosed.

When ultra-violet radiation with a wavelength of less than 400 nm is directed at a surface of a selected semiconductor, for example titanium dioxide (TiO₂) or zinc oxide (ZnO), the energy of the photons excites the electrons from the valence band to the conduction band. As a consequence, the short carbon chain of the ethylene breaks up very readily in a spontaneous chemical reaction on the surface of the semiconductor or in direct proximity to the surface. The final products generated by the reaction are carbon dioxide and water.

The patent publication EP 2 559 340 B1 discloses a method for inhibiting the sprouting of potatoes. In the method, an ethylene concentration of 1 - 100 ppm is maintained in a space where potatoes are kept. Gas chromatography is used for measuring the ethylene concentration.

The object of the invention is to provide a system for a storage/transport space for removing ethylene present in the air from a closed space, which reduces plant spoilage in a closed space. The characteristic features of this invention are indicated in the attached patent claim 1. A further object of the invention is to provide a method for storing and transporting vegetables, fruit, flowers and other plants by means of which the ethylene concentration of a closed storage or transport space is controlled. The characteristic features of this invention are indicated in the attached patent claim 10.

The system according to the invention for a storage/transport space for removing ethylene present in the air from a closed space, which storage/transport space contains an air-circulating refrigeration apparatus, includes a device comprising a housing which creates a flow channel into the device, a fan which creates an air flow into said housing and a reaction chamber which includes photocatalytic surfaces and a light source which are arranged to produce a photocatalytic reaction in order to eliminate ethylene. The system further includes an ethylene sensor which measures the ethylene concentration in the closed space, data transfer means for sending the measurement data to a server and recording means for recording the measurement data.

This way, the preservation of the plants can be improved by removing the ethylene accumulating in the surrounding air. The continuous monitoring of the ethylene concentration makes it possible to ventilate the space when necessary or else to increase the removal of ethylene if the ethylene concentration becomes too high. This reduces spoilage during the storage and transport of fruit, vegetables, flowers and other plants. Recording the ethylene concentration over the entire duration of the storage and/or transport chain also offers valuable additional information regarding the quality of the storage and/or transport.

In addition to ethylene, the device according to the invention eliminates bacteria, mould, fungi and viruses present in the air, dissipates organic compounds as well as many organic odours and converts them into harmless carbon dioxide and water.

In addition to an ethylene sensor, the system can include other sensors which measure the properties of the air of a closed space such as an oxygen concentration sensor, a carbon dioxide concentration sensor, a propylene concentration sensor, an acetylene concentration sensor and a temperature sensor.

In this context, a transport space can mean any mobile space suitable for the transport of fruit, vegetables, flowers or other plants such as, for example, the load space of a truck or a shipping container.

The ethylene sensor is advantageously arranged inside the housing of the device in such a manner that the air flows through the ethylene sensor before the reaction chamber. This way, it is possible to measure the ethylene concentration in the air flowing into the device, which corresponds to the actual ethylene concentration in the air in the room. The sensor is also protected from breakage inside the housing of the device. In addition, the sensor can be configured to draw its operating power from the device.

The sensor and other electronics can also be on the outside of the housing of the device.

The system advantageously includes software means configured to trigger an alarm if the ethylene concentration exceeds a pre-defined limit value. This way, any rise in the ethylene concentration above the limit value is made known quickly, which makes it possible to start to take the required measures for the prevention of the spoiling of the plants immediately.

The system advantageously includes software means for the readout of the real-time ethylene concentration. The conditions of the surrounding air can be observed continuously this way.

The system is advantageously configured to measure and record the ethylene concentration in a database every 1 s - 10 min, advantageously every 10 s - 2 min. It is thereby possible to characterize changes in the ethylene concentration with adequate precision.

The refrigeration apparatus of the storage or transport space is advantageously configured as the flow source of the device. The device thereby does not require a separate energy source, but can draw its operating power from the refrigeration apparatus.

The device is advantageously arranged on the ceiling of the storage or transport space. The device thereby does not take space away from the plants in storage or transport.

The effective air volume of a storage space can be 5 - 60 %, advantageously 8 - 30 %, of the nominal purifying capacity of the device. The wattage of the photocatalytic air purifier is advantageously 5 W/m³ (generally 0.5 - 10 W/m³).

The effective air volume of a transport space can be 5 - 60 %, advantageously 8 - 30 %, of the nominal purifying capacity of the device. The wattage of the photocatalytic air purifier is advantageously 2 W/m³ (generally 1 - 10 W/m³).

The effective air volume may be considerably smaller than the nominal volume if the goods present in the space take up a considerable part of the total volume.

The method according to the invention for storing and transporting vegetables, fruit, flowers and other plants includes the reduction of an ethylene concentration in a closed storage or transport space by photocatalytic oxidation. In addition, the ethylene concentration is measured in the storage or transport space and the measurement data is sent to a server in real time and recorded by a selected time interval. This way, it is possible to reduce spoilage during the storage and transport of fruit, vegetables, flowers and other plants.

Advantageously, if the ethylene concentration exceeds a pre-defined limit value, an alarm is triggered. This way, a rise in the ethylene concentration above a limit value is made known quickly, which makes it possible to start to take the required measures for the prevention of the spoiling of the plants immediately.

Advantageously, if the ethylene concentration exceeds a pre-defined limit value, the storage or transport space is ventilated. This way, it is possible to reduce the ethylene concentration of the storage or transport space quickly.

The ventilation of the storage or transport space can occur manually or in an automated manner.

The invention is illustrated in the following in detail with reference to the attached drawings illustrating embodiments of the invention, wherein
- Figure 1: shows schematically a device for purifying air comprised by the system according to the invention,
- Figure 2: shows schematically the system according to the invention in a transport space,
- Figure 3: shows measurement data of the effect of the system according to the invention on the ethylene concen-tration of a closed space.

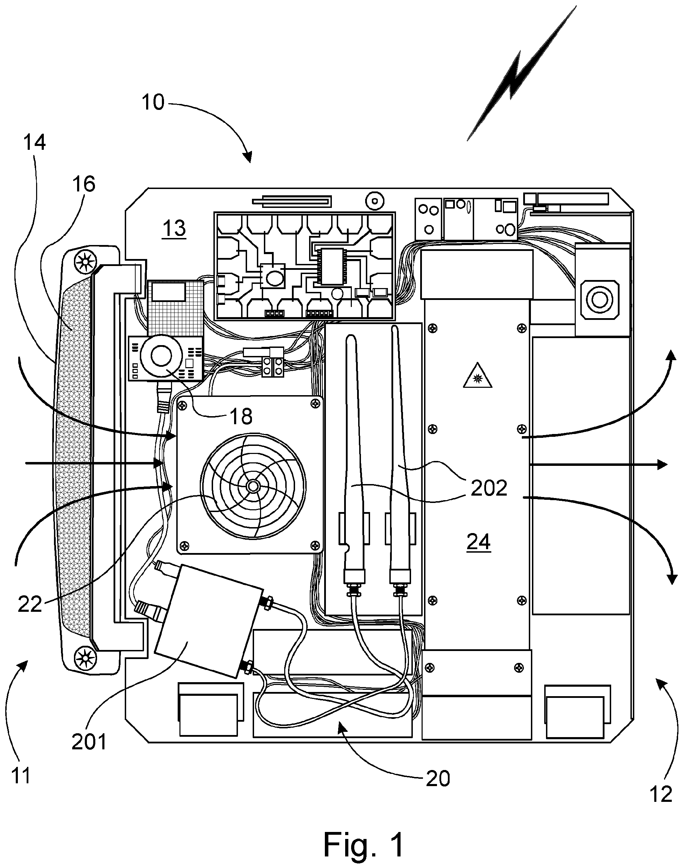

Figure 1 shows an embodiment of the device 10 comprised by the system according to the invention for removing ethylene from a closed space. The action of the device 10 is based on the creation of an air flow through the device 10 and the elimination of the ethylene molecules present in the air inside the device 10.

In this embodiment, the air purifier used for the removal of the ethylene is an Airocide GCS-25 model, the wattage of which is 78 W and the nominal purifying capacity of which is 150 m³ (the size of the space).

The device 10 includes a housing, which is omitted in Figure 1. Figure 1 shows the components present inside the device 10, which are arranged on a base plate 13 of the device 10. The housing creates a flow channel through which the air flows inside the device 10. The measurement of the ethylene concentration and the elimination of the ethylene occur inside the housing of the device 10. For the generation of the air flow, the device 10 contains a fan 22, which sucks air into the device 10 from a first end 11 of the device 10 and blows the air out of a second end 12 of the device 10.

The air flows into the device 10 through a grille 14 at the first end 11. In a connected arrangement with the grille 14 is a coarse filter 16 for filtering particulates. Right next to the course filter 16 on the suction side of the device 10 is an ethylene sensor 18 for measuring the ethylene concentration. The ethylene sensor 18 can be, for example, a Membrapor C2H4/M-200 model, which can measure an ethylene concentration with a precision to 1 ppm in the range 0 - 200 ppm. Examples of the circuit configuration of the ethylene sensor 18 can be found in the publications
- Membrapor, "Specification Sheet for Ethylene Sensor Type C2H4/M-200",
- Membrapor, "4 to 20 mA Transmitter Board for ElectroChemical Gas Sensor Suitable for Compact-Sensors (Pin layout: 7-Series)",
- CO2Meter, Inc., "EC200 Electrochemical Sensor Controller Manual", and
- N.A. Zaidi et al., "A Gas Chromatographic System for the Detection of Ethylene Gas Using Ambient Air as a Carrier Gas", Sensors 2017, 17, 2283.

The ethylene sensor 18 is connected to data transfer means 20, which include a router 201 and antennas 202. The ethylene concentration can be measured, for example, every 30 seconds and the measurement data transmitted by the data transfer means 20 to a server using a data communications network. It is thereby possible to monitor the ethylene concentration of the space in real time by a remote connection and the historic data of the ethylene concentration can be recorded with a long interval using the recording means.

Photocatalytic oxidation eliminates the ethylene molecules in the reaction chamber 24 through which the air flows inside the device 10. The reaction chamber 24 contains glass tubes coated with titanium dioxide. The energy of the photons produced by the light source excites the electrons from the valence band to the conduction band of the titanium dioxide. The titanium dioxide surface activated by the ultra-violet radiation acts as a catalyst for a chemical reaction in which the ethylene decomposes into carbon dioxide and water. In addition, water molecules present in the vicinity of the activated titanium dioxide surface split into two parts, creating free hydroxyl radicals and oxygen ions. The hydroxyl radical is one of the strongest oxidizing agents and eliminates ethylene extremely efficiently.

The light source which activates the catalyst is a normal antibacterial lamp in which a low-pressure mercury discharge produces an intense ultra-violet radiation with a wavelength of 254 nm. There are six lamps in this embodiment.

The purified air flows out of the second end 12 of the device 10.

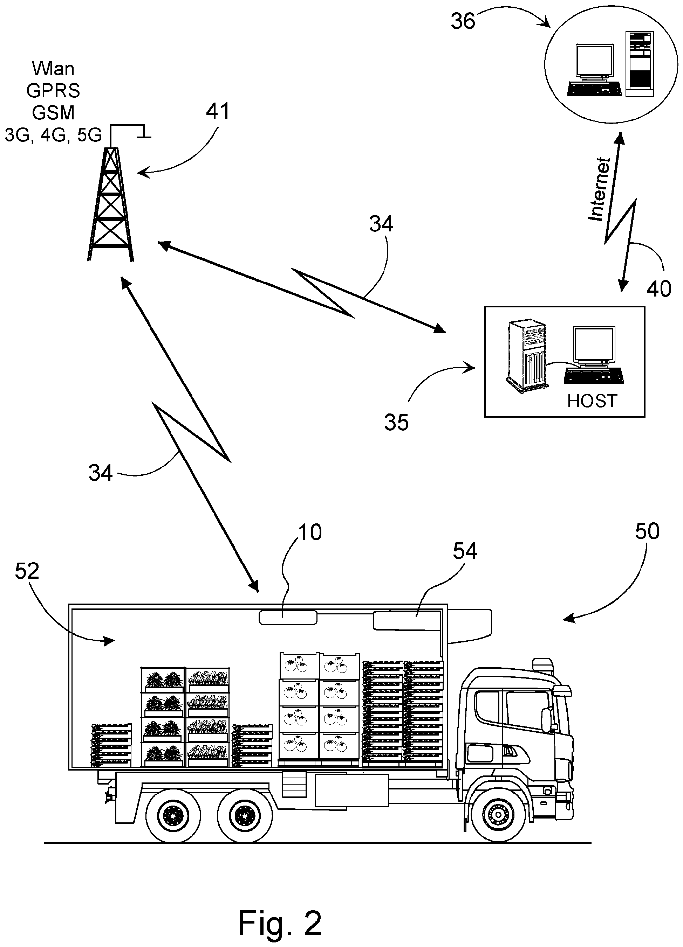

In the scenario depicted in Figure 2, the device 10 is arranged in a transport space 52 of a truck 50. The transport space 52 contains an air-circulating refrigeration apparatus 54 by means of which the transport space 52 is maintained at a selected temperature during transport in order to improve the preservability of the plants. The device 10 is arranged in the proximity of the refrigeration apparatus 54 on the ceiling of the transport space 52, whereby it does not take space away from the load. The device 10 is configured to draw its operating power from the refrigeration apparatus 54.

During transport, the ethylene concentration of the transport space 52 can be monitored in real time. The reading of the ethylene sensor 18 is sent by means of the data transfer means 20 via a network 34 to a server 35 at selected intervals, for example every 30 seconds. The ethylene concentration of the transport space 52 can be recorded in a memory by means of recording means provided on the server 35. The server 35 can be accessed with a computer 36 via the internet 40. The computer 36 can be, for example, the mobile phone of the driver of the truck 50. The same server 35 can serve a plurality of different transport and storage spaces.

The network 34 can be any data communications network. Different options are, for example, GSM, GPRS, 3G, 4G, 5G and WLAN. The linkup from the base stations 41 to the server 35 is naturally operator-specific and is of no significance from the point of view of the present invention.

By means of software means provided on the server 35, the system can be configured to trigger an alarm if the ethylene concentration of the transport space 52 exceeds a pre-defined limit value, for example 20 ppm. The limit value may be exceeded, for example, if the ethylene-removing device 10 fails. For example, if the ethylene concentration exceeds a limit value during the transportation of plants, an alarm can be transmitted to the mobile phone of the driver of the truck 50, whereby the transport space 52 can be ventilated immediately in order to reduce the ethylene concentration. Alternatively, an automated ventilation can be realized in the transport space 52, which is switched on if the ethylene concentration exceeds a limit value.

The device 10 can also be used in plant storage spaces, for example, in refrigerated spaces of stores where fruit, vegetables and flowers await sale.

With the system according to the invention, for example tomatoes and flowers can be stored and transported in the same space.

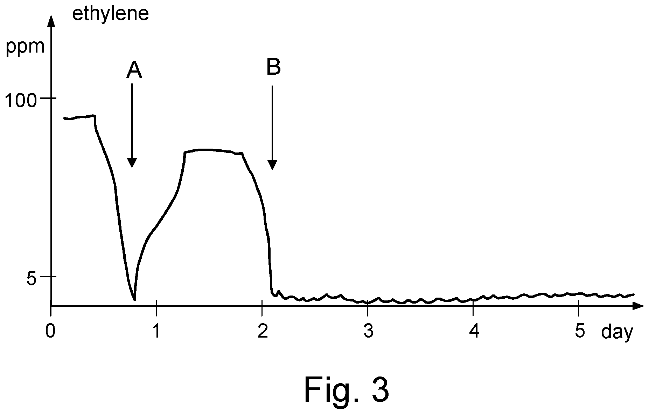

Figure 3 shows the ethylene concentration of a closed space as a function of time. The ethylene concentration is measured with a system according to the invention in a segregated storage space containing an air-circulating refrigeration apparatus. The ethylene concentration is initially high. At point A, the door of the room is opened, whereby the space is ventilated and the ethylene concentration decreases. Fruit is brought into the space, whereby the ethylene concentration starts to increase. At point B, the device 10 is switched on, whereby the ethylene concentration of the space decreases considerably. After a certain period of time, the ethylene concentration saturates and remains very low while the device 10 is in operation.

## Claims

1. System for a storage/transport space for removing ethylene present in the air from a closed space, which storage/transport space contains an air-circulating refrigeration device (54), the system including a device (10) comprising
- a housing which creates a flow channel into the device,
- a fan (22) which creates an air flow into said housing,
- a reaction chamber (24) which includes photocatalytic surfaces and a light source which are arranged to produce a photocatalytic reaction in order to eliminate ethylene,
**characterized in that** the system further includes
- an ethylene sensor (18) which measures the ethylene concentration present in said closed space,
- data transfer means (20) for sending the measurement data to a server (35),
- recording means for recording the measurement data.

2. The system according to claim 1, **characterized in that** the ethylene sensor (18) is arranged inside the housing of the device (10) in such a manner that the air flows through the ethylene sensor (18) before the reaction chamber (24).

3. The system according to claim 1 or 2, **characterized in that** the system includes software means configured to trigger an alarm if the ethylene concentration exceeds a pre-defined limit value.

4. The system according to any of claims 1 - 3, **characterized in that** the system includes software means for the readout of the real-time ethylene concentration.

5. The system according to any of claims 1 - 4, **characterized in that** the system is configured to measure and record the ethylene concentration in a database every 1 s - 10 min, advantageously every 10 s - 2 min.

6. The system according to any of claims 1 - 5, **characterized in that** the refrigeration apparatus (54) of the storage or transport space is configured as the flow source of the device (10).

7. The system according to any of claims 1 - 6, **characterized in that** the device (10) is arranged on the ceiling of the storage or transport space.

8. The system according to any of claims 1 - 7, **characterized in that** the effective air volume of the storage space is 5 - 60 %, advantageously 8 - 30 %, of the nominal purifying capacity of the device (10) .

9. The system according to any of claims 1 - 7, **characterized in that** the effective air volume of the transport space is 5 - 60 %, advantageously 8 - 30 %, of the nominal purifying capacity of the device (10) .

10. Method for storing and transporting vegetables, fruit, flowers and other plants, which method includes the reduction of an ethylene concentration in a closed storage or transport space by photocatalytic oxidation, **characterized in that** the ethylene concentration is measured in said storage or transport space and the measurement data is sent to a server in real time and recorded by a selected interval.

11. The method according to claim 10, **characterized in that** an alarm is triggered if the ethylene concentration exceeds a pre-defined limit value.

12. The method according to claim 10 or 11, **characterized in that** the storage or transport space is ventilated if the ethylene concentration exceeds a pre-defined limit value.
